# FASCICULE DE BREVET EUROPEEN

(11) **EP 2 947 534 B1**
(45) Date de publication et mention de la délivrance du brevet: **05.07.2017**
(21) Numéro de dépôt: 15166710.2
(22) Date de dépôt: 07.05.2015
(51) Int. Cl.: G05D 1/06, G01S 1/02

(54) **PROCÉDÉ ET SYSTÈME DE CONTRÔLE D'UN AÉRONEF**
VERFAHREN UND SYSTEM ZUR STEUERUNG EINES LUFTFAHRZEUGS
METHOD AND SYSTEM FOR CONTROLLING AN AIRCRAFT

(30) Priorité: 16.05.2014 FR 1454398
(43) Date de publication de la demande: 25.11.2015
(73) Titulaire: AIRBUS OPERATIONS (S.A.S), 31060 Toulouse (FR)
(72) Inventeur: Tatham, Gilles, 31470 FONTENILLES (FR); Muller, Jean, 31170 TOURNEFEUILLE (FR)
(74) Mandataire: Sarraméa, Claude

(56) Documents cités:
- EP-A1- 2 765 389
- EP-A2- 2 511 733
- US-B1- 7 089 092
- US-B1- 7 546 183

## Description

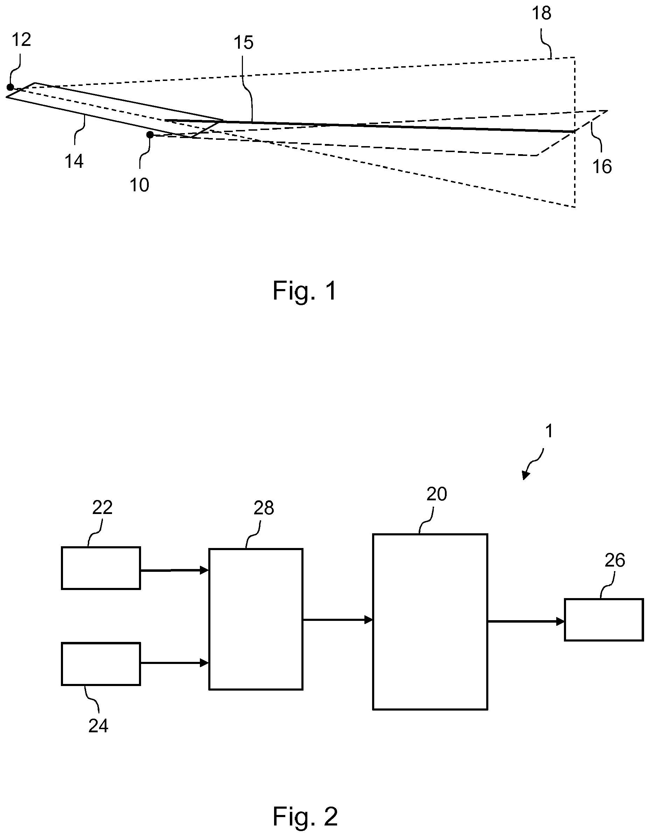

La présente invention concerne un procédé et un système de contrôle d'un aéronef ainsi qu'un aéronef pourvu d'un tel système. Les aéronefs modernes, en particulier les avions de transport, sont amenés à atterrir sur des aéroports conformément à des procédures d'approche prédéfinies. Généralement, une procédure d'approche prévoit un axe d'approche de la piste d'atterrissage sur laquelle l'aéronef doit atterrir. Cet axe d'approche correspond à la trajectoire que l'aéronef est censé voler lors d'une phase d'approche de la piste d'atterrissage conformément à la procédure d'approche considérée. Il existe plusieurs types de procédures d'approche, correspondant notamment à différentes façons de réaliser l'asservissement de la trajectoire de l'aéronef sur cet axe d'approche. Parmi ces types de procédures d'approche, on peut notamment citer les approches de type ILS (« Instrument Landing System » en anglais) qui permettent une bonne précision de guidage de l'aéronef le long de l'axe d'approche. Dans un tel cas, comme représenté sur la figure 1, la piste d'atterrissage 14 est équipée de deux émetteurs radiofréquences appelés Glide (ou Glide Slope) et Loc (ou Localizer) émettant chacun un faisceau d'ondes radiofréquences. L'émetteur Glide 10 émet un faisceau d'ondes 16 dans un plan incliné d'un angle prédéterminé par rapport à un plan horizontal et l'émetteur Loc 12 émet un faisceau d'ondes vertical 18. Ces émetteurs sont positionnés à proximité de la piste d'atterrissage de telle façon que l'intersection des deux faisceaux d'ondes émises par ces émetteurs corresponde à l'axe d'approche ILS 15 défini pour cette piste d'atterrissage. Pour qu'un aéronef puisse voler selon une approche ILS, il doit être équipé d'un récepteur ILS. Ce récepteur fournit des informations correspondant à la valeur de l'écart entre la position courante de l'aéronef et l'axe d'approche : il fournit une information d'écart latéral par rapport au faisceau Loc et une information d'écart vertical par rapport au faisceau Glide. Ces informations d'écart sont utilisées à bord de l'aéronef pour guider l'aéronef le long de l'axe d'approche. Pour cela, elles peuvent notamment être envoyées à un système de pilotage automatique ou à un directeur de vol de l'aéronef. Un système de ILS est montré par exemple dans le document US 7,089,092. Toutefois, les ondes émises par les émetteurs Glide et Loc sont susceptibles d'être réfléchies par un objet qui viendrait à se trouver dans un des faisceaux émis par ces émetteurs. Un tel objet peut notamment être un autre aéronef, un véhicule roulant au sol... Les ondes réfléchies sont susceptibles d'être elles-aussi reçues par l'aéronef, selon la position de celui-ci. Il en résulte alors un phénomène dit de multi-trajets : il y a recomposition du signal reçu par l'aéronef en ligne droite depuis l'émetteur, avec le signal réfléchi reçu par l'aéronef. Cela produit une perturbation temporaire de l'information d'écart latéral et/ou vertical fournie par le récepteur ILS à bord de l'aéronef. Une telle perturbation peut induire un écart de trajectoire de l'aéronef, pouvant parfois nécessiter une interruption de l'approche ILS. Pour pallier à de tels problèmes, des zones dites sensibles ont été définies en particulier à proximité des émetteurs Glide et Loc. Dans des conditions de faible visibilité, aucun autre aéronef ni aucun autre véhicule ne doit se trouver dans lesdites zones sensibles lorsqu'un aéronef réalise une phase d'approche ILS de la piste d'atterrissage. Une telle mesure permet d'éviter l'apparition de perturbations des informations fournies par le récepteur ILS. Toutefois, cela présente l'inconvénient de réduire significativement la cadence avec laquelle les aéronefs peuvent se succéder pour atterrir sur la piste d'atterrissage dans de telles conditions. En effet, après l'atterrissage d'un aéronef, celui-ci doit avoir quitté ces zones sensibles avant que l'aéronef suivant puisse réaliser une approche ILS en vue d'atterrir sur la piste d'atterrissage.

La présente invention a pour objet de remédier aux inconvénients précités. Elle concerne un procédé de contrôle d'un aéronef lors d'une approche en vue d'un atterrissage sur une piste d'atterrissage équipée d'un système d'atterrissage aux instruments de type ILS, un axe d'approche étant associé à ladite approche et l'aéronef étant équipé d'un récepteur ILS, le procédé comprenant les étapes suivantes réalisées de façon automatique et répétitive, consistant à :
- acquérir une première information provenant du récepteur ILS, cette première information correspondant à un écart entre une position courante de l'aéronef et ledit axe d'approche ;
- déterminer une consigne de guidage de l'aéronef en vue d'un atterrissage sur ladite piste d'atterrissage, en fonction de ladite première information ;
- guider l'aéronef en fonction de ladite consigne de guidage,

Ce procédé comporte en outre les étapes suivantes consistant à :
- acquérir une deuxième information relative à la vitesse ou à l'accélération de l'aéronef, indépendante de ladite première information provenant du récepteur ILS ;
- comparer l'évolution, sur un intervalle de temps, de la première information et de la deuxième information, en réalisant une comparaison :
   - de l'évolution de la dérivée par rapport au temps de la première information avec l'évolution de la deuxième information, lorsque la deuxième information correspond à une vitesse de l'aéronef ; ou
   - de l'évolution de la dérivée seconde par rapport au temps de la première information avec l'évolution de la deuxième information, lorsque la deuxième information correspond à une accélération de l'aéronef,
   de façon à détecter une éventuelle incohérence entre l'évolution de la première information et l'évolution de la deuxième information ; et
- lorsqu'une incohérence est détectée, corriger la première information en fonction d'une information indépendante de ladite première information.

Ce procédé permet de détecter une incohérence entre l'évolution de la première information fournie par le récepteur ILS et l'évolution de la deuxième information, indépendante de la première information. Par conséquent, il permet de détecter une perturbation temporaire de la première information, ladite perturbation pouvant notamment être due à un phénomène de multi-trajets. Lorsqu'une perturbation est détectée, la première information est corrigée en fonction d'une information indépendante de la première information. Cela permet par conséquent d'éviter les effets de la perturbation sur la première information telle que corrigée et donc sur le guidage de l'aéronef. Il en résulte que l'aéronef peut voler une approche ILS sans risque de perturbation de son guidage, même lorsqu'un véhicule se trouve dans une desdites zones sensibles définies à proximité des émetteurs Glide ou Loc. Avec l'invention, lorsque plusieurs aéronefs se succèdent pour atterrir sur la piste d'atterrissage, il n'est par conséquent pas nécessaire qu'un aéronef précédent ait quitté ces zones sensibles avant qu'un aéronef suivant puisse réaliser une approche ILS. Il en résulte donc une augmentation significative de la cadence avec laquelle les aéronefs peuvent se succéder pour atterrir sur la piste d'atterrissage dans des conditions de faible visibilité.

Selon un mode particulier de réalisation, la deuxième information correspond à l'une des informations suivantes :
- une information de de vitesse ou d'accélération de l'aéronef fournie par un système inertiel ou anémo-inertiel de l'aéronef ;
- une information de vitesse ou d'accélération de l'aéronef fournie par un système inertiel ou anémo-inertiel de l'aéronef combinée avec une information fournie par un récepteur de type GNSS de l'aéronef.

De façon avantageuse, l'information indépendante de la première information, utilisée pour corriger la première information lorsqu'une incohérence est détectée, correspond à l'une des informations suivantes :
- une information de position, de vitesse ou d'accélération de l'aéronef fournie par un système inertiel ou anémo-inertiel de l'aéronef ;
- une information de position, de vitesse ou d'accélération de l'aéronef fournie par un système inertiel ou anémo-inertiel de l'aéronef combinée avec une information fournie par un récepteur de type GNSS de l'aéronef ;
- une information correspondant à une valeur constante, de préférence nulle.

L'invention est également relative à un système de contrôle d'un aéronef comportant un récepteur ILS, une unité d'acquisition et une unité de contrôle de l'aéronef, cette unité de contrôle étant configurée de façon à mettre en oeuvre les étapes suivantes de façon automatique et répétitive, lors d'une approche en vue d'un atterrissage sur une piste d'atterrissage équipée d'un système d'atterrissage aux instruments de type ILS, un axe d'approche étant associé à ladite approche :
- acquérir de l'unité d'acquisition une première information provenant du récepteur ILS, cette première information correspondant à un écart entre une position courante de l'aéronef et ledit axe d'approche ;
- déterminer une consigne de guidage de l'aéronef en vue d'un atterrissage sur ladite piste d'atterrissage, en fonction de ladite première information ;
- transmettre cette consigne de guidage à une unité de guidage de l'aéronef de façon à guider l'aéronef en fonction de ladite consigne de guidage.
L'unité d'acquisition est en outre configurée de façon à mettre en oeuvre les étapes suivantes :
- acquérir une deuxième information relative à la vitesse ou à l'accélération de l'aéronef, indépendante de la première information provenant du récepteur ILS ;
- comparer l'évolution, sur un intervalle de temps, de la première information et de la deuxième information, en réalisant une comparaison :
   - de l'évolution de la dérivée par rapport au temps de la première information avec l'évolution de la deuxième information, lorsque la deuxième information correspond à une vitesse de l'aéronef ; ou
   - de l'évolution de la dérivée seconde par rapport au temps de la première information avec l'évolution de la deuxième information, lorsque la deuxième information correspond à une accélération de l'aéronef,
   de façon à détecter une éventuelle incohérence entre l'évolution de la première information et l'évolution de la deuxième information ;
- lorsqu'une incohérence est détectée, corriger la première information en fonction d'une information indépendante de ladite première information.

Selon des modes particuliers de réalisation, l'unité de guidage est une unité de type pilote automatique ou une unité de type directeur de vol.

L'invention concerne aussi un aéronef équipé d'un système de contrôle tel que précité.

L'invention sera mieux comprise à la lecture de la description qui suit et à l'examen des figures annexées.
La figure 1, déjà décrite, est une vue en perspective illustrant un système d'approche ILS d'une piste d'atterrissage.
La figure 2 représente, de façon schématique, un système de contrôle d'un aéronef conforme à un mode de réalisation de l'invention.

Le système 1 de contrôle d'un aéronef représenté sur la figure 2 comporte une unité de contrôle 20 dont une entrée est reliée à une sortie d'une unité d'acquisition 28. Une sortie de l'unité de contrôle 20 est reliée à une unité de guidage 26 de l'aéronef. Une entrée de l'unité d'acquisition 28 est reliée à une sortie d'un récepteur ILS 22. Une autre entrée de l'unité d'acquisition 28 est reliée à une source d'informations 24. Cette source d'informations 24 peut notamment correspondre à une unité IRS (« Inertial Reference System » en anglais), à une unité ADIRS (« Air Data Inertial Reference System » en anglais) ou encore à une unité GPIRS (« Global Positioning / Inertial Reference System » en anglais). Les unités IRS et ADIRS correspondent respectivement à des systèmes inertiel et anémo-inertiel tel que mentionné précédemment. Une unité GPIRS comporte une unité IRS ou ADIRS, ainsi qu'un récepteur de type GNSS. Elle est apte à produire une information de position, de vitesse ou d'accélération de l'aéronef correspondant à une information fournie par l'unité IRS ou ADIRS, combinée avec une information fournie par un récepteur de type GNSS.

En fonctionnement, lorsque l'aéronef vole une phase d'approche ILS en vue d'atterrir sur une piste d'atterrissage équipée d'un système d'atterrissage aux instruments de type ILS, de façon cyclique l'unité d'acquisition 28 transmet à l'unité de contrôle 20 une première information provenant du récepteur ILS 22, cette première information correspondant à un écart entre une position courante de l'aéronef et l'axe d'approche ILS associé à ladite approche ILS. Cette première information peut notamment correspondre à un écart horizontal entre la position courante de l'aéronef et le faisceau Loc associé à l'axe d'approche ILS, ou à un écart vertical entre la position courante de l'aéronef et le faisceau Glide associé à l'axe d'approche ILS. Cette première information peut également correspondre à un couple formé dudit écart horizontal et dudit écart vertical. En fonction de ladite première information, l'unité de contrôle 20 détermine de façon classique une consigne de guidage de l'aéronef permettant de guider l'aéronef le long de l'axe d'approche ILS en vue d'un atterrissage sur la piste d'atterrissage, puis elle envoie cette consigne de guidage vers l'unité de guidage 26 qui peut être par exemple un pilote automatique ou un directeur de vol.

L'unité d'acquisition 28 acquiert en outre, de la source d'information 24, une deuxième information indépendante de la première information provenant du récepteur ILS 22. Cette deuxième information est relative à la position, la vitesse ou l'accélération de l'aéronef. L'unité d'acquisition 28 compare l'évolution, sur un intervalle de temps, de la première information et de la deuxième information, de façon à détecter une éventuelle incohérence entre l'évolution de la première information et l'évolution de la deuxième information. Cet intervalle de temps peut être défini entre un instant initial tᵢ et un instant final t_{f}. Plusieurs variantes sont possibles pour réaliser la comparaison de l'évolution de la première information et de la deuxième information :
- selon une première variante, cette comparaison correspond à une comparaison de l'évolution de la première information, avec l'évolution d'un écart calculé entre la position courante de l'aéronef et l'axe d'approche ILS. La deuxième information correspond alors à une position de l'aéronef et ledit écart calculé correspond à un écart entre cette deuxième information et l'axe d'approche ILS, les caractéristiques de l'axe d'approche ILS étant disponibles dans une base de données à bord de l'aéronef. En particulier, cette comparaison peut consister à calculer d'une part une première différence entre la valeur de la première information à l'instant final t_{f} et la valeur de la première information à l'instant initial tᵢ, et d'autre part une deuxième différence entre la valeur dudit écart calculé à l'instant final t_{f} et la valeur dudit écart calculé à l'instant initial tᵢ, puis à calculer une troisième différence entre la première différence et la deuxième différence. Si cette troisième différence est supérieure, en valeur absolue, à un seuil prédéterminé, alors une incohérence est détectée entre l'évolution de la première information et l'évolution de la deuxième information ;
- selon une deuxième variante, cette comparaison correspond à une comparaison de l'évolution de la dérivée par rapport au temps de la première information, avec l'évolution de la deuxième information, cette deuxième information correspondant alors à une vitesse de l'aéronef. En particulier, cette comparaison peut consister à calculer d'une part une première différence entre la valeur de la dérivée par rapport au temps de la première information à l'instant final t_{f} et la valeur de la dérivée par rapport au temps de la première information à l'instant initial tᵢ, et d'autre part une deuxième différence entre la valeur de la deuxième information à l'instant final t_{f} et la valeur de la deuxième information à l'instant initial tᵢ, puis à calculer une troisième différence entre la première différence et la deuxième différence. Si cette troisième différence est supérieure, en valeur absolue, à un seuil prédéterminé, alors une incohérence est détectée entre l'évolution de la première information et l'évolution de la deuxième information ;

- selon une troisième variante, cette comparaison correspond à une comparaison de l'évolution de la dérivée seconde par rapport au temps de la première information, avec l'évolution de la deuxième information, cette deuxième information correspondant alors à une accélération de l'aéronef. En particulier, cette comparaison peut consister à calculer d'une part une première différence entre la valeur de la dérivée seconde par rapport au temps de la première information à l'instant final t_{f} et la valeur de la dérivée seconde par rapport au temps de la première information à l'instant initial tᵢ, et d'autre part une deuxième différence entre la valeur de la deuxième information à l'instant final t_{f} et la valeur de la deuxième information à l'instant initial tᵢ, puis à calculer une troisième différence entre la première différence et la deuxième différence. Si cette troisième différence est supérieure, en valeur absolue, à un seuil prédéterminé, alors une incohérence est détectée entre l'évolution de la première information et l'évolution de la deuxième information.

Lorsqu'une incohérence est détectée, l'unité d'acquisition 28 corrige la première information en fonction d'une information indépendante de ladite première information. Plusieurs alternatives sont possibles pour corriger la première information en fonction de ladite information indépendante :
- selon une première alternative, cette information indépendante correspond à une valeur constante. Ainsi, l'unité d'acquisition 28 corrige la première information en la remplaçant par une valeur corrigée correspondant à ladite valeur constante. De préférence, cette valeur constante est nulle. Etant donné que la première information correspond à un écart entre la position courante de l'aéronef et l'axe d'approche ILS, cette correction consiste alors à considérer un écart nul entre la position courante de l'aéronef et l'axe d'approche ILS ;
- selon une deuxième alternative, cette information indépendante correspond encore à une valeur constante. La valeur de la première information à l'instant initial tᵢ est considérée non perturbée. L'unité d'acquisition 28 calcule une valeur corrigée de la première information à un instant courant, cette valeur corrigée correspondant à la somme de la première information à l'instant initial tᵢ et de ladite information indépendante de valeur constante. De préférence, cette valeur constante est nulle. Par conséquent, étant donné que la première information correspond à un écart entre la position courante de l'aéronef et l'axe d'approche ILS, la correction calculée par l'unité d'acquisition 28 consiste alors à considérer que l'écart entre la position courante de l'aéronef et l'axe d'approche ILS est constant entre l'instant initial tᵢ et l'instant courant ;
- selon une troisième alternative, cette information indépendante correspond à une vitesse de l'aéronef. La valeur de la première information à l'instant initial tᵢ est considérée non perturbée. Comme indiqué précédemment, elle correspond à un écart entre la position courante de l'aéronef et l'axe d'approche ILS. L'unité d'acquisition 28 calcule une variation dudit écart entre l'instant initial tᵢ et un instant courant en fonction de ladite vitesse de l'aéronef, puis elle calcule une valeur corrigée de la première information correspondant à la somme de la première information à l'instant initial tᵢ et de ladite variation dudit écart entre l'instant initial tᵢ et l'instant courant. Cela permet d'avoir une faible erreur sur la valeur corrigée de la première information. Selon un exemple de réalisation non limitatif de l'invention, pour calculer la variation de l'écart entre l'instant initial tᵢ et l'instant courant, l'unité d'acquisition 28 intègre l'information indépendante de vitesse pour déterminer une variation de position de l'aéronef entre l'instant initial tᵢ et l'instant courant. Les caractéristiques de l'axe d'approche ILS étant disponibles dans une base de données à bord de l'aéronef, l'unité d'acquisition 28 détermine une variation de la projection de l'aéronef sur l'axe d'approche ILS en fonction de ladite variation de position de l'aéronef. Etant donné que l'axe d'approche ILS est linéaire, il n'est pas nécessaire pour cela de connaître la position absolue de l'aéronef. L'unité d'acquisition 28 calcule alors ladite variation de l'écart entre l'instant initial tᵢ et l'instant courant en calculant la différence entre la variation de position de l'aéronef et la variation de la projection de l'aéronef sur l'axe d'approche.

Dans le cas de la troisième alternative, l'information indépendante, qui correspond à une vitesse de l'aéronef, peut provenir d'une unité IRS, ADIRS ou encore GPIRS de l'aéronef. Selon des cas particuliers, cette vitesse peut être distincte de la deuxième information ou bien être fournie par la source d'informations 24 fournissant la deuxième information. Dans ce dernier cas, lorsque la deuxième information est une information de position de l'aéronef, cette vitesse peut être obtenue par calcul d'une dérivée par rapport au temps de ladite position. Lorsque la deuxième information est une information d'accélération de l'aéronef, cette vitesse peut être obtenue par un calcul d'intégration par rapport au temps de ladite accélération.

Selon des modes particuliers de réalisation, l'unité d'acquisition 28 peut notamment être intégrée dans :
- le récepteur ILS 22 ;
- un récepteur multimode MMR (« Multi Mode Receiver » en anglais), lequel peut regrouper notamment le récepteur ILS 22 et la source d'informations 24 ;
- un calculateur modulaire avionique IMA (« Integrated Modular Avionics » en anglais) ;
- un calculateur de guidage de l'aéronef.

## Revendications

1. Procédé de contrôle d'un aéronef lors d'une approche en vue d'un atterrissage sur une piste d'atterrissage (14) équipée d'un système d'atterrissage aux instruments de type ILS (10, 12), un axe d'approche (15) étant associé à ladite approche et l'aéronef étant équipé d'un récepteur ILS (22), le procédé comprenant les étapes suivantes réalisées de façon automatique et répétitive, consistant à :
- acquérir une première information provenant du récepteur ILS (22), cette première information correspondant à un écart entre une position courante de l'aéronef et ledit axe d'approche (15) ;
- déterminer une consigne de guidage de l'aéronef en vue d'un atterrissage sur ladite piste d'atterrissage (14), en fonction de ladite première information ;
- guider l'aéronef en fonction de ladite consigne de guidage,
**caractérisé en ce qu'**il comporte en outre les étapes suivantes consistant à :
- acquérir une deuxième information relative à la vitesse ou à l'accélération de l'aéronef, indépendante de ladite première information provenant du récepteur ILS ;
- comparer l'évolution, sur un intervalle de temps, de la première information et de la deuxième information, en réalisant une comparaison :
. de l'évolution de la dérivée par rapport au temps de la première information avec l'évolution de la deuxième information, lorsque la deuxième information correspond à une vitesse de l'aéronef ; ou
. de l'évolution de la dérivée seconde par rapport au temps de la première information avec l'évolution de la deuxième information, lorsque la deuxième information correspond à une accélération de l'aéronef,
de façon à détecter une éventuelle incohérence entre l'évolution de la première information et l'évolution de la deuxième information ; et
- lorsqu'une incohérence est détectée, corriger la première information en fonction d'une information indépendante de ladite première information.

2. Procédé selon la revendication 1, dans lequel la deuxième information correspond à l'une des informations suivantes :
- une information de vitesse ou d'accélération de l'aéronef fournie par un système inertiel ou anémo-inertiel de l'aéronef ;
- une information de vitesse ou d'accélération de l'aéronef fournie par un système inertiel ou anémo-inertiel de l'aéronef combinée avec une information fournie par un récepteur de type GNSS de l'aéronef.

3. Procédé selon l'une quelconque des revendications précédentes, dans lequel l'information indépendante de la première information, utilisée pour corriger la première information lorsqu'une incohérence est détectée, correspond à l'une des informations suivantes :
- une information de position, de vitesse ou d'accélération de l'aéronef fournie par un système inertiel ou anémo-inertiel de l'aéronef ;
- une information de position, de vitesse ou d'accélération de l'aéronef fournie par un système inertiel ou anémo-inertiel de l'aéronef combinée avec une information fournie par un récepteur de type GNSS de l'aéronef ;
- une information correspondant à une valeur constante.

4. Système (1) de contrôle d'un aéronef comportant un récepteur ILS (22), une unité d'acquisition (28) et une unité de contrôle (20) de l'aéronef, cette unité de contrôle étant configurée de façon à mettre en oeuvre les étapes suivantes de façon automatique et répétitive, lors d'une approche en vue d'un atterrissage sur une piste d'atterrissage (14) équipée d'un système d'atterrissage aux instruments de type ILS, un axe d'approche (15) étant associé à ladite approche :
- acquérir de l'unité d'acquisition (28) une première information provenant du récepteur ILS (22), cette première information correspondant à un écart entre une position courante de l'aéronef et ledit axe d'approche (15) ;
- déterminer une consigne de guidage de l'aéronef en vue d'un atterrissage sur ladite piste d'atterrissage, en fonction de ladite première information ;
- transmettre cette consigne de guidage à une unité de guidage (26) de l'aéronef de façon à guider l'aéronef en fonction de ladite consigne de guidage,
**caractérisé en ce que** l'unité d'acquisition (28) est en outre configurée de façon à mettre en oeuvre les étapes suivantes :
- acquérir une deuxième information relative à la vitesse ou à l'accélération de l'aéronef, indépendante de la première information provenant du récepteur ILS ;
- comparer l'évolution, sur un intervalle de temps, de la première information et de la deuxième information, en réalisant une comparaison :
. de l'évolution de la dérivée par rapport au temps de la première information avec l'évolution de la deuxième information, lorsque la deuxième information correspond à une vitesse de l'aéronef ; ou
. de l'évolution de la dérivée seconde par rapport au temps de la première information avec l'évolution de la deuxième information, lorsque la deuxième information correspond à une accélération de l'aéronef,
de façon à détecter une éventuelle incohérence entre l'évolution de la première information et l'évolution de la deuxième information ; et
- lorsqu'une incohérence est détectée, corriger la première information en fonction d'une information indépendante de ladite première information.

5. Système selon la revendication 4 dans lequel l'unité de guidage (26) est une unité de type pilote automatique.

6. Système selon la revendication 4 dans lequel l'unité de guidage (26) est une unité de type directeur de vol.

7. Aéronef comportant un système (1) de contrôle selon l'une quelconque des revendications 4 à 6.

## Patentansprüche

1. Verfahren zur Steuerung eines Luftfahrzeugs bei einem Anflug mit dem Ziel einer Landung auf einer Landebahn (14), die mit einem Instrumentenlandesystem von der Art ILS (10, 12) ausgestattet ist, wobei eine Anflugachse (15) dem Anflug zugeordnet und das Luftfahrzeug mit einem ILS-Empfänger (22) ausgestattet ist, wobei das Verfahren die folgenden Schritte enthält, die automatisch und wiederholt ausgeführt werden, die darin bestehen:
- eine vom ILS-Empfänger (22) kommende erste Information zu erfassen, wobei diese erste Information einer möglichen Abweichung zwischen einer aktuellen Position des Luftfahrzeugs und der Anflugachse (15) entspricht;
- einen Führungssollwert des Luftfahrzeugs mit dem Ziel einer Landung auf der Landebahn (14) abhängig von der ersten Information zu bestimmen;
- das Luftfahrzeug abhängig von dem Führungssollwert zu führen,
**dadurch gekennzeichnet, dass** es außerdem die folgen Schritte aufweist, die darin bestehen:
- eine zweite Information bezüglich der Geschwindigkeit oder der Beschleunigung des Luftfahrzeugs zu erfassen, die von der vom ILS-Empfänger kommenden ersten Information unabhängig ist;
- über einen Zeitraum die Entwicklung der ersten Information und der zweiten Information zu vergleichen, indem ein Vergleich durchgeführt wird
. der Entwicklung der Ableitung bezüglich der Zeit der ersten Information mit der Entwicklung der zweiten Information, wenn die zweite Information einer Geschwindigkeit des Luftfahrzeugs entspricht; oder
. der Entwicklung der zweiten Ableitung bezüglich der Zeit der ersten Information mit der Entwicklung der zweiten Information, wenn die zweite Information einer Beschleunigung des Luftfahrzeugs entspricht,
um eine mögliche Inkohärenz zwischen der Entwicklung der ersten Information und der Entwicklung der zweiten Information zu erfassen; und
- wenn eine Inkohärenz erfasst wird, die erste Information abhängig von einer von der ersten Information unabhängigen Information zu korrigieren.

2. Verfahren nach Anspruch 1, wobei die zweite Information einer der folgenden Informationen entspricht:
- einer Geschwindigkeits- oder Beschleunigungsinformation des Luftfahrzeugs, die von einem Trägheitssystem oder einem Wind-Trägheitssystem des Luftfahrzeugs geliefert wird;
- einer Geschwindigkeits- oder Beschleunigungsinformation des Luftfahrzeugs, die von einem Trägheitssystem oder einem Wind-Trägheitssystem des Luftfahrzeugs geliefert wird, kombiniert mit einer von einem Empfänger der Art GNSS des Luftfahrzeugs gelieferten Information.

3. Verfahren nach einem der vorhergehenden Ansprüche, wobei die von der ersten Information unabhängige Information, die verwendet wird, um die erste Information zu korrigieren, wenn eine Inkohärenz erfasst wird, einer der folgenden Informationen entspricht:
- einer Positions-, Geschwindigkeits- oder Beschleunigungsinformation des Luftfahrzeugs, die von einem Trägheitssystem oder einem Wind-Trägheitssystem des Luftfahrzeugs geliefert wird;
- einer Positions-, Geschwindigkeits- oder Beschleunigungsinformation des Luftfahrzeugs, die von einem Trägheitssystem oder einem Wind-Trägheitssystem des Luftfahrzeugs geliefert wird, kombiniert mit einer von einem Empfänger der Art GNSS des Luftfahrzeugs gelieferten Information;
- einer einem konstanten Wert entsprechenden Information.

4. System (1) zur Steuerung eines Luftfahrzeugs, das einen ILS-Empfänger (22), eine Erfassungseinheit (28) und eine Steuerungseinheit (20) des Luftfahrzeugs aufweist, wobei diese Steuerungseinheit so konfiguriert ist, dass sie die folgenden Schritte bei einem Anflug mit dem Ziel einer Landung auf einer Landebahn (14), die mit einem Instrumentenlandesystem von der Art ILS ausgestattet ist, automatisch und wiederholt durchführt, wobei eine Anflugachse (15) dem Anflug zugeordnet ist:
- Erfassen von der Erfassungseinheit (28) einer ersten Information, die vom ILS-Empfänger (22) kommt, wobei diese erste Information einer Abweichung zwischen einer aktuellen Position des Luftfahrzeugs und der Anflugachse (15) entspricht;
- Bestimmen eines Führungssollwerts des Luftfahrzeugs mit dem Ziel einer Landung auf der Landebahn, abhängig von der ersten Information;
- Übertragen dieses Führungssollwerts an eine Führungseinheit (26) des Luftfahrzeugs, um das Luftfahrzeug abhängig vom Führungssollwert zu führen,
**dadurch gekennzeichnet, dass** die Erfassungseinheit (28) außerdem konfiguriert ist, die folgenden Schritte durchzuführen:
- Erfassen einer zweiten Information bezüglich der Geschwindigkeit oder der Beschleunigung des Luftfahrzeugs, unabhängig von der vom ILS-Empfänger kommenden ersten Information;
- Vergleich der Entwicklung, über einen Zeitraum, der ersten Information und der zweiten Information, indem ein Vergleich durchgeführt wird:
. der Entwicklung der Ableitung bezüglich der Zeit der ersten Information mit der Entwicklung der zweiten Information, wenn die zweite Information einer Geschwindigkeit des Luftfahrzeugs entspricht; oder
. der Entwicklung der zweiten Ableitung bezüglich der Zeit der ersten Information mit der Entwicklung der zweiten Information, wenn die zweite Information einer Beschleunigung des Luftfahrzeugs entspricht,
um eine mögliche Inkohärenz zwischen der Entwicklung der ersten Information und der Entwicklung der zweiten Information zu erfassen; und
- wenn eine Inkohärenz erfasst wird, Korrigieren der ersten Information abhängig von einer von der ersten Information unabhängigen Information.

5. System nach Anspruch 4, wobei die Führungseinheit (26) eine Einheit von der Art Autopilot ist.

6. System nach Anspruch 4, wobei die Führungseinheit (26) eine Einheit von der Art Flugleitanlage ist.

7. Luftfahrzeug, das ein Steuerungssystem (1) nach einem der Ansprüche 4 bis 6 aufweist.

## Claims

1. Method for controlling an aircraft in approach for a landing on a landing runway (14) equipped with an instrument landing system of ILS type (10, 12), an approach axis (15) being associated with said approach and the aircraft being equipped with an ILS receiver (22), the method comprising the following steps, performed automatically and repetitively, consisting in:
- acquiring a first information item originating from the ILS receiver (22), this first information item corresponding to a deviation between a current position of the aircraft and said approach axis (15);
- determining a guidance setting for the aircraft for a landing on said landing runway (14), as a function of said first information item;
- guiding the aircraft according to said guidance setting,
**characterized in that** it further comprises the following steps consisting in:
- acquiring a second information item concerning the speed or the acceleration of the aircraft, independent of said first information item originating from the ILS receiver;
- comparing the trend, over a time interval, of the first information item and of the second information item, by performing a comparison:
• of the trend of the drift over time of the first information item with the trend of the second information item, when the second information item corresponds to a speed of the aircraft; or
• of the trend of the second drift over time of the first information item with the trend of the second information item, when the second information item corresponds to an acceleration of the aircraft,
so as to detect any inconsistency between the trend of the first information item and the trend of the second information item; and
- when an inconsistency is detected, correcting the first information item as a function of an information item independent of said first information item.

2. Method according to Claim 1, in which the second information item corresponds to one of the following information items:
- an aircraft speed or acceleration information item supplied by an inertial or anemo-inertial system of the aircraft;
- an aircraft speed or acceleration information item supplied by an inertial or anemo-inertial system of the aircraft combined with an information item supplied by a receiver of GNSS type of the aircraft.

3. Method according to either one of the preceding claims, in which the information item independent of the first information item, used to correct the first information item when an inconsistency is detected, corresponds to one of the following information items:
- an aircraft position, speed or acceleration information item supplied by an inertial or anemo-inertial system of the aircraft;
- an aircraft position, speed or acceleration information item supplied by an inertial or anemo-inertial system of the aircraft combined with an information item supplied by a receiver of GNSS type of the aircraft;
- an information item corresponding to a constant value.

4. System (1) for controlling an aircraft comprising an ILS receiver (22), an acquisition unit (28) and a control unit (20) of the aircraft, this control unit being configured so as to implement the following steps automatically and repetitively, in an approach for a landing on a landing runway (14) equipped with an instrument landing system of ILS type, an approach axis (15) being associated with said approach:
- acquiring from the acquisition unit (28) a first information item originating from the ILS receiver (22), this first information item corresponding to a deviation between a current position of the aircraft and said approach axis (15) ;
- determining a guidance setting for the aircraft for a landing on said landing runway, as a function of said first information item;
- transmitting this guidance setting to a guidance unit (26) of the aircraft so as to guide the aircraft according to said guidance setting,
**characterized in that** the acquisition unit (28) is further configured so as to implement the following steps:
- acquiring a second information item relating to the speed or the acceleration of the aircraft, independent of the first information item originating from the ILS receiver;
- comparing the trend, over a time interval, of the first information item and of the second information item, by performing a comparison:
• of the trend of the drift over time of the first information item with the trend of the second information item, when the second information item corresponds to a speed of the aircraft; or
• of the trend of the second drift over time of the first information item with the trend of the second information item, when the second information item corresponds to an acceleration of the aircraft,
so as to detect any inconsistency between the trend of the first information item and the trend of the second information item; and
- when an inconsistency is detected, correcting the first information item as a function of an information item independent of said first information item.

5. System according to Claim 4, in which the guidance unit (26) is a unit of automatic pilot type.

6. System according to Claim 4, in which the guidance unit (26) is a unit of flight director type.

7. Aircraft comprising a control system (1) according to any one of Claims 4 to 6.
